# EUROPEAN PATENT APPLICATION

(11) **EP 2 696 416 A1**
(43) Date of publication of application: **12.02.2014**
(21) Application number: 12767958.7
(22) Date of filing: 30.03.2012
(51) Int. Cl.: H01M 8/02, C01F 17/00, H01M 4/88, H01M 8/12

(54) **METHOD FOR PRODUCING CERIUM COMPLEX OXIDE, SOLID OXIDE FUEL CELL, AND FUEL CELL SYSTEM**

(30) Priority: 01.04.2011 JP 2011082020
(71) Applicant: Toto Ltd., Kitakyushu, Fukuoka 802-8601 (JP)
(72) Inventor: ANDO Shigeru, Kitakyushu-shi Fukuoka 802-8601 (JP); ISHIGURO Akira, Kitakyushu-shi Fukuoka 802-8601 (JP); KAWAKAMI Akira, Kitakyushu-shi Fukuoka 802-8601 (JP); SHIMAZU Megumi, Kitakyushu-shi Fukuoka 802-8601 (JP); MOMIYAMA Yutaka, Kitakyushu-shi Fukuoka 802-8601 (JP); KAKINUMA Yasuo, Kitakyushu-shi Fukuoka 802-8601 (JP)
(74) Representative: Witte, Weller & Partner
(86) International application number: PCT/JP2012/058565
(87) International publication number: WO 2012/137682

(57) **Abstract**

On the other hand, the possibility of estimating the dopant ratio of a metal element to each ceria crystalline particle using integral-width or half-width obtained by XRD was considered as follows: an XRD peak is shifted depending on the dopant ratio of La to ceria; when La increases, an XRD peak is shifted to a lower angle; in XRD performed on a raw material obtained by mixing ceria crystalline particles having different dopant ratio, peaks corresponding to the respective dopant ratio exist close to each other; as a result, a peak width is widened; accordingly, the dopant ratio of a metal element to each ceria crystalline particles are supposed to vary when integral-width and half-width obtained by XRD are large. Thus, it was revealed for the first time that integral-width and half-width obtained by XRD indicate variations in dopant ratio. It should be noted that from the direct proportional relationship between the dopant ratio x and the integral-width for dopant ratio ranging from 0.35 to 0.45, integral-widths obtained by XRD are derived to be 0. 10 to 0.30 for dopant ratio ranging from 0.35 to 0.45, and half-widths are derived to be 0.10 to 0.30 similarly.

## Description

### Technical Field

The present invention relates to a method for producing a cerium-based composite oxide.

### Background Art

In recent years, intense studies have been conducted on low operating-temperature solid oxide fuel cells to suppress operating temperatures of solid oxide fuel cells to around 600 °C to 800°C. As a solid electrolyte material for low operating-temperature solid oxide fuel cells, lanthanum gallates oxides have been proposed (e.g., see Japanese Patent Application Publication No. 2002-15756 (pages 1 to 9, Figs. 1 to 9) and Japanese Patent Application Publication No. H11-33516 (pages 1 to 12, Figs. 1 to 12)). However, since lanthanum gallate oxides have high reactivity with other materials, there are cases where reaction of lanthanum gallate oxides with air electrode materials and fuel electrode materials produces high-resistance reaction product phases to degrade power generation performance.

To cope with this problem, solid oxide fuel cells having fuel electrodes serving as supports have been proposed in which a cerium-based composite oxide layer made of La-doped ceria is provided as a reaction preventing layer between a fuel electrode and a solid electrolyte layer made of lanthanum gallate oxide (e.g., see Electrochemical and Solid-State Letters, 7(5) A105-A107 (2004)). However, when a solid oxide fuel cell is operated, the fuel electrode side is supplied with fuel gas and therefore exposed to a reducing atmosphere. When the supply of fuel gas is stopped during the suspension of operations, high-temperature air may flow into the fuel electrode side through an outlet-side opening portion of a fuel gas flow path. In such a case, problems of the cracking of the electrolyte and the breakage of the cell occur to degrade output performance.

### Summary of Invention

Earnest studies conducted this time on the above-described matter have revealed the following for the first time: specifically, differences in dopant ratio of a metal element to each ceria crystalline particles of a reaction preventing layer lead to variations in volume change rates associated with expansion and contraction upon reduction and oxidation; this causes strains between the crystalline particles and induces micro-cracking; as a result, the cerium-based composite oxide layer shows a decrease in strength to become unable to withstand compositely occurring stresses, and this leads to the breakage of the cerium-based composite oxide layer; and, in the worst case, this leads to the detachment of the reaction preventing layer.

In conventional methods for producing cerium-based composite oxides, a predetermined percentage of a compound including a metal element (La, Pr, or Nd) has been merely added to ceria to obtain a predetermined composition. In other words, only the input amount of the metal element to be inputted as a raw material has been considered. Accordingly, why the breakage and detachment of the cerium-based composite oxide layer occurs has been unknown. The studies have revealed that the dopant ratio of the metal element to the each ceria crystalline particles constituting cerium-based composite oxide as a fired product are different from each other even when the input amount of the metal element is the same, and that this leads to the breakage of the cerium-based composite oxide layer. In detail, the following has been revealed: differences in the dopant ratio of the metal element to the each ceria crystalline particles of the cerium-based composite oxide layer as a fired product lead to variations in volume change rates associated with expansion and contraction upon reduction and oxidation; this causes strains between the crystalline particles and induces micro-cracking; as a result, the cerium-based composite oxide layer shows a decrease in strength to become unable to withstand compositely occurring stresses, and this leads to the breakage of the cerium-based composite oxide layer; and, in the worst case, this leads to the detachment of the reaction preventing layer. Furthermore, the studies have produced a way to indirectly measure the dopant ratio of the metal element to the each ceria crystalline particles constituting the cerium-based composite oxide layer as a fired product. This suppresses variations in dopant ratio of the metal element to the each ceria crystalline particles, the dopant ratio varying heretofore even when the input amount has been the same.

Accordingly, the breakage of the cerium-based composite oxide layer caused by such variations has also been overcome. Thus, the present invention has been accomplished to solve the above-described problem, and provides a method for producing a cerium-based composite oxide in which the dopant ratio of a metal element to each ceria crystalline particle constituting a cerium-based composite oxide layer as a fired product is limited to a predetermined range throughout the fired product so that problems of electrolyte cracking and cell breakage which will be caused by variations in contraction rate upon oxidation or the like, which will occur during, e.g., suspension of operations or the like may be prevented.

In order to achieve the above-described purpose, the present invention provides a method for producing a cerium-based composite oxide to be used as a reaction preventing layer of a solid oxide fuel cell to prevent reaction between a fuel electrode layer and an electrolyte layer, including the steps of : mixing a compound including at least one metal element selected from La, Pr, and Nd and a cerium-based compound to obtain a mixture; and firing the mixture to obtain a fired product, the method further including a dopant ratio adjustment step of adjusting a dopant ratio of the metal element to each ceria crystalline particle constituting the fired product to limit the dopant ratio to a predetermined range throughout the fired product.

According to the present invention, a way to adjust the dopant ratio of a metal element to cerium-based compound has been devised. Specifically, with the dopant ratio adjustment step of adjusting the dopant ratio of a metal element (La, Pr, or Nd) to each ceria crystalline particle constituting the fired product to a predetermined range throughout the fired product after firing, a method for producing a cerium-based composite oxide can be provided which prevents problems of electrolyte cracking and cell breakage during the suspension of operations and which suppresses deterioration of output performance.

In detail, in conventional methods for producing cerium-based composite oxides, a predetermined percentage of a compound including a metal element (La, Pr, or Nd) has been merely added to ceria to obtain a predetermined composition. In other words, no consideration has been given to limiting the dopant ratio of the metal element to each ceria crystalline particle to a predetermined range, and only the input amount of the metal element to be inputted as a raw material has been considered. This is the first time that the following has been revealed: even when the input amount of the metal element is the same, variations in dopant ratio of the metal element to the each ceria crystalline particles lead to variations in volume change rates associated with expansion and contraction upon reduction and oxidation; this causes the breakage of the cerium-based composite oxide layer; and, in the worst case, this leads to the detachment of the reaction preventing layer. In the present invention, to cope with this problem, the dopant ratio of a metal element to each ceria crystalline particle constituting the fired product is limited to a predetermined range throughout the fired product after firing. Accordingly, compared to conventional cases where only the input amount of a raw material has been considered, variations in expansion rate upon reduction, caused by variations in dopant ratio, are suppressed, and the beginning of the breakage of the cerium-based composite oxide layer can be eliminated.

Thus, the present invention also provides a solid oxide fuel cell including a cerium-based composite oxide preventing reaction between a fuel electrode layer and an electrolyte layer. The cerium-based composite oxide is disposed as a reaction preventing layer between the fuel electrode and the electrolyte. In the cerium-based composite oxide, a dopant ratio of at least one metal element selected from La, Pr, and Nd to a ceria crystalline particle is in a predetermined range throughout the ceria crystalline particles.

In a preferred aspect of the present invention, the metal element in the compound including the metal element mixed with the cerium-based compound is La, and the predetermined range in the dopant ratio adjustment step is from 0.35 to 0.45. Moreover, in the solid oxide fuel cell, the metal element is La, and the predetermined range is from 0.35 to 0.45.

According to the present invention, since the dopant ratio of La to each ceria crystalline particle is limited to the range of 0.35 to 0.45, variations in the coefficient of expansion upon oxidation and reduction of each ceria crystalline particle can be suppressed, and beginning of the breakage of the cerium-based composite oxide layer caused by differences in expansion can be eliminated.

The present inventors have discovered that the amount of expansion upon reduction and the amount of contraction upon oxidation of each ceria crystalline particle constituting the cerium-based composite oxide vary depending on the value of x in the general formula (CeO₂)₁₋ₓ(LnO_{1.5})ₓ (where Ln is La). The result of comparison of the amounts of expansion upon reduction for values x of 0.1, 0.2, 0.3, and 0.4 indicates that the amount of expansion is smallest for 0.4 and largest for 0.1. Similarly, the comparison result of the amounts of contraction upon oxidation indicates that the amount of contraction is the smallest for 0.4 and largest for 0.1. The value of x is desirably 0.35 to 0.45 because cerium-based composite oxide is stable to such an extent that the volume thereof does not change upon oxidation and reduction. However, in conventional methods for producing cerium-based composite oxides, there have been cases where electrolyte cracking and cell breakage occur during the suspension of operations.

In conventional methods for producing cerium-based composite oxides, the amount of a predetermined percentage of La has been added to ceria to obtain a predetermined composition. In other words, the problem of variations in dopant ratio of La to each ceria crystalline particles has not been recognized, and limiting such variations to a predetermined range has not been considered. Only the input amount of La to be inputted as a raw material has been considered. The ionic radius of La is larger than that of ceria. Accordingly, Ce is difficult to be doped with La, and the inventors supposed that Ce was doped with some of the added La. However, means for measuring the dopant ratio of La to a ceria crystalline particle has not been proposed heretofore, and there has been no way of knowing the dopant ratio of La to a ceria crystalline particle. In the studies, the present inventors have enabled the measurement of variations in the dopant ratio of La to Ce.

As a result, it has been found that variations in the values of dopant ratio of La to the each ceria crystalline particles are related to possibilities of electrolyte cracking and cell breakage during the suspension of operations. Specifically, the following has been proved for the first time: in conventional methods for producing cerium-based composite oxides, even when the input amount of La is the same, variations in dopant ratio of La to the each ceria crystalline particles lead to variations in the expansion rates of the each crystalline particles upon oxidation and reduction; this causes strains between the crystalline particles and induces micro-cracking; as a result, the cerium-based composite oxide layer shows a decrease in strength to become unable to withstand compositely occurring stresses, and this leads to the breakage of the cerium-based composite oxide layer; and, in the worst case, this leads to the detachment of the reaction preventing layer.

In the present invention, to cope with this problem, the dopant ratio of La to each ceria crystalline particle is limited to a predetermined range. Accordingly, compared to conventional cases where only the input amount of La as a raw material is considered, variations in expansion rate upon reduction caused by variations in dopant ratio are suppressed, and beginnings of the breakage of the cerium-based composite oxide layer can be eliminated. Accordingly, in a preferred aspect of the solid oxide fuel cell of the present invention, the metal element is La, and the predetermined range is from 0.35 to 0.45.

In a preferred aspect of the present invention, the dopant ratio adjustment step includes a step of identifying a cerium-based composite oxide having a dopant ratio in the range of 0.35 to 0.45 through a dopant ratio estimation step of estimating the dopant ratio, and rejecting a cerium-based composite oxide having a dopant ratio outside the range of 0.35 to 0.45.

According to the present invention, since a cerium-based composite oxide having a dopant ratio outside the range of 0.35 to 0.45 is rejected in the dopant ratio estimation step, portions having greatly different coefficients of expansion can be rejected. Thus, variations in the coefficients of expansion upon reduction of each ceria crystalline particles can be suppressed, and beginnings of the breakage of the cerium-based composite oxide layer caused by differences in expansion can be eliminated.

In a preferred aspect of the present invention, in the dopant ratio estimation step, the dopant ratio is estimated based on a distribution of Raman shift peaks. Raman shifts are caused by vibrations of atoms in molecules. However, an analysis of the present inventors has proved that the distribution of Raman shift peaks show relevance between cerium atom-ion, oxygen atom-ion, and lanthanum atom-ion to reflect the state of solid dissolution of complex oxide in ceria, and therefore can be used to estimate the dopant ratio.

According to the present invention, since the dopant ratio is estimated based on a distribution of Raman shift peaks, a dopant ratio of La to each ceria crystalline particle can be very easily found, and a portion having a different coefficient of expansion can be rejected. Thus, variations in the coefficient of expansion upon reduction of each ceria crystalline particle can be suppressed, and beginnings of the breakage of the cerium-based composite oxide layer caused by differences in expansion can be eliminated. Accordingly, in a preferred aspect of the solid oxide fuel cell of the present invention, the dopant ratio is estimated based on a distribution of Raman shift peaks.

In a preferred aspect of the present invention, a cerium-based composite oxide in which a value calculated by (measured value at a Raman shift of 610 cm⁻¹) /(measured value at a Raman shift of 565 cm⁻¹) is more than 0.7 is rejected.

According to the present invention, since a dopant ratio can be estimated using a value calculated by (measured value at a Raman shift of 610 cm⁻¹) /(measured value at a Raman shift of 565 cm⁻¹), a dopant ratio of La to each ceria crystalline particle can be very easily found. Based on the obtained dopant ratio, a cerium-based composite oxide having a dopant ratio outside the range of 0.35 to 0.45 is rejected. Accordingly, a portion having a greatly different coefficient of expansion can be rejected. Thus, variations in the coefficients of expansion upon reduction of each ceria crystalline particles can be suppressed, and beginnings of the breakage of the cerium-based composite oxide layer caused by differences in expansion can be eliminated. Accordingly, in a preferred aspect of the solid oxide fuel cell of the present invention, a ratio of a peak value at a Raman shift of 610 cm⁻¹ to a peak value at a Raman shift of 565 cm⁻¹ is not more than 0.7 throughout the cerium-based composite oxide.

In a preferred aspect of the present invention, in the dopant ratio estimation step, the dopant ratio is estimated using any one of an integral-width and half-width, each obtained by XRD for a predetermined BET value. An integral-width and half-width generally depend on crystallite diameter and non-uniformity of stress. However, an analysis of the present inventors has proved that in the case where an element having a larger ionic radius than ceria is incorporated, and where the BET value is limited to a predetermined range, the integral-width or the half-width reflects the state of solid dissolution of complex oxide with respect to ceria, and can be used to estimate dopant ratio

According to the present invention, since a dopant ratio is estimated using any one of an integral-width and half-width, each obtained by XRD for a predetermined BET value, a dopant ratio of La to each ceria crystalline particle can be very easily found, and a portion having a different coefficient of expansion can be rejected. Thus, variations in the coefficients of expansion upon reduction of each ceria crystalline particles can be suppressed, and beginnings of the breakage of the cerium-based composite oxide layer caused by differences in expansion can be eliminated. Accordingly, in a preferred aspect of the solid oxide fuel cell of the present invention, the dopant ratio is estimated using any one of an integral-width and half-width, each obtained by XRD for a predetermined BET value.

In a preferred aspect of the present invention, the predetermined BET value is 5 to 10 m²/g, and a cerium-based composite oxide having the integral-width of more than 0.3 is rejected, the integral-width being calculated for a peak of (111) planes that appears at 2Θ = approximately 27.6°, the peak being obtained by XRD.

According to the present invention, since a dopant ratio is estimated using an integral-width obtained by XRD for a predetermined BET value, a dopant ratio in each ceria crystalline particle can be very easily found. Based on the obtained dopant ratio, a cerium-based composite oxide having a dopant ratio outside the range of 0.35 to 0.45 is rejected. Accordingly, a portion having a greatly different coefficient of expansion can be rejected. Thus, variations in the coefficients of expansion upon reduction of each ceria crystalline particles can be suppressed, and beginnings of the breakage of the cerium-based composite oxide layer caused by differences in expansion can be eliminated. Accordingly, in a preferred aspect of the solid oxide fuel cell of the present invention, the predetermined BET value is 5 to 10 m²/g, and the integral-width is not more than 0.3 throughout the cerium-based composite oxide, the integral-width being calculated for a peak of (111) planes that appears at 2Θ = approximately 27.6°, the peak being obtained by XRD.

In a preferred aspect of the present invention, the predetermined BET value is 5 to 10 m²/g, and a cerium-based composite oxide having the half-width of more than 0.3 is rejected, the half-width being calculated for a peak of (111) planes that appears at 2Θ = approximately 27.6°, the peak being obtained by XRD.

According to the present invention, since a dopant ratio is estimated using half-width obtained by XRD for a predetermined BET value, a dopant ratio of La to each ceria crystalline particle can be very easily found. Based on the obtained dopant ratio, a cerium-based composite oxide having a dopant ratio outside the range of 0.35 to 0.45 is rejected. Accordingly, a portion having a greatly different coefficient of expansion can be rejected. Thus, variations in the coefficients of expansion upon reduction of each ceria crystalline particles can be suppressed, and beginnings of the breakage of the cerium-based composite oxide layer caused by differences in expansion can be eliminated. Accordingly, in a preferred aspect of the solid oxide fuel cell of the present invention, the predetermined BET value is 5 to 10 m²/g, and the half-width is not more than 0.3 throughout the cerium-based composite oxide, the half-width being calculated for a peak of (111) planes that appears at 2Θ = approximately 27.6°, the peak being obtained by XRD.

Another aspect of the present invention provides a solid oxide fuel cell including the cerium-based composite oxide produced by the aforementioned production method, the cerium-based composite oxide is disposed as a reaction preventing layer between a fuel electrode and an electrolyte.

According to the present invention, the cerium-based composite oxide layer in which the dopant ratio of La to each ceria crystalline particle is limited to a predetermined range is provided as a reaction preventing layer. Accordingly, compared to conventional cases where only the input amount of a raw material is considered, variations in expansion and contraction rates of each ceria crystalline particles upon oxidation and reduction can be suppressed. This makes it possible to provide a solid oxide fuel cell having the beginning of the breakage of the cerium-based composite oxide layer are eliminated.

Yet another aspect of the present invention provides a fuel cell system including the solid oxide fuel cell.

According to the present invention, with the cell including as a reaction preventing layer the cerium-based composite oxide layer in which the dopant ratio of La to each ceria crystalline particle is limited to be in a predetermined range, while in conventional cases, only the input amount of a raw material is considered, variations in expansion and contraction rates of the each ceria crystalline particles upon oxidation and reduction can be suppressed. This makes it possible to provide a fuel cell system in which beginnings of the breakage of the cerium-based composite oxide layer are eliminated.

### Brief Description of Drawings

Fig. 1 is a view showing an overall configuration of a solid electrolyte fuel cell system according to one embodiment of the present invention.
Fig. 2 is a front cross-sectional view showing a fuel cell module of the solid electrolyte fuel cell system according to the embodiment of the present invention.
Fig. 3 is a cross-sectional view taken along line III-III of Fig. 2.
Fig. 4 is a partial cross-sectional view showing one fuel cell of the solid electrolyte fuel cell system according to the embodiment of the present invention.
Fig. 5 is a view showing a cross section of a solid oxide fuel cell having a fuel electrode serving as a support, the solid oxide fuel cell being prepared in an example of the present invention.
Fig. 6 is a Raman spectrum of a cerium-based composite oxide for a solid electrolyte fuel cell according to the embodiment of the present invention.
Fig. 7 is a Raman spectrum of a cerium-based composite oxide for a solid electrolyte fuel cell of a comparative example.
Fig. 8 shows an XRD pattern of the cerium-based composite oxide for a solid electrolyte fuel cell according to the embodiment of the present invention.
Fig. 9 is a view showing the relationship between dopant ratio and Raman shift peak ratio.

### Description of Embodiment

A method for producing a cerium-based composite oxide for a solid oxide fuel cell according to the present invention includes the step of limiting a dopant ratio of a metal element to each ceria crystalline particle to a predetermined range throughout a fired product after firing. It should be noted that a metal element present in grain boundaries is not the metal element with which ceria crystalline particles is doped.

In the present invention, the metal element added to ceria is La, Pr, or Nd. In particular, from the viewpoints of reaction preventing layer and oxygen ion conductivity, La is preferred.

In the method for producing a cerium-based composite oxide for a solid oxide fuel cell according to the present invention, the step of limiting a dopant ratio of La to each ceria crystalline particle to a predetermined range is preferably performed under the following condition: the predetermined range is from 0.35 to 0.45.

In the method for producing a cerium-based composite oxide for a solid oxide fuel cell according to the present invention, the step of limiting a dopant ratio of La to each ceria crystalline particle to a predetermined range desirably includes the steps of rejecting a particle having a dopant ratio outside the range of 0.35 to 0.45 through a dopant ratio estimation step.

In the method for producing a cerium-based composite oxide for a solid oxide fuel cell according to the present invention, the dopant ratio estimation step is desirably performed as follows: the dopant ratio is estimated based on a distribution of Raman shift peaks.

In the present invention, a Raman shift means a Raman spectrum obtained by Raman spectroscopy using a laser Raman spectrometer. Moreover, in a Raman shift of the present invention, peak distribution means estimation based on intensities at 565 cm⁻¹ and 610 cm⁻¹ using a green laser (532 nm), which is typically used in a laser Raman spectrometer.

In the method for producing a cerium-based composite oxide for a solid oxide fuel cell according to the present invention, it is desirable to reject a cerium-based composite oxide in which a ratio of a peak value at a Raman shift of 610 cm⁻¹ to a peak value at a Raman shift of 565 cm⁻¹ is more than 0.7. In the present invention, the ratio of a peak value at a Raman shift of 610 cm⁻¹ to a peak value at a Raman shift of 565 cm⁻¹ means a value obtained as follows: a straight line connecting a measured value at 650 cm⁻¹ and a measured value at 495 cm⁻¹ is drawn to be regarded as background; a peak height at 610 cm⁻¹ after background correction and a peak height at 565 cm⁻¹ after background correction are found; and calculating (measured value at 610 cm⁻¹) / (measured value at 565 cm⁻¹) provides the value.

In the method for producing a cerium-based composite oxide for a solid oxide fuel cell according to the present invention, the dopant ratio estimation step is desirably performed as follows: a dopant ratio is estimated using integral-width or half-width, each obtained by XRD for a predetermined BET value. In the present invention, a BET value means a value measured by the BET method using nitrogen gas adsorption, which is a most typical method for measuring the specific surface area of powder. In the present invention, an integral-width obtained by XRD means a peak width generally obtained as a width of an X-ray diffraction peak observed using an X-ray diffractometer at the height corresponding to 1/2 of the integral thereof. In the present invention, half-width obtained by XRD means the width of an X-ray diffraction peak observed using an X-ray diffractometer at 1/2 of the height thereof.

In the method for producing a cerium-based composite oxide for a solid oxide fuel cell according to the present invention, it is desirable that the predetermined BET value is 5 to 10 m²/g, and a cerium-based composite oxide having the integral-width of more than 0.3 is rejected, the integral-width being calculated for a peak of (111) planes that appears at 2Θ = approximately 27.6°, the peak being obtained by XRD. It should be noted that the integral-width may be an average of a value calculated for a peak of (400) planes that appears at 2Θ = approximately 67° and a value calculated for a peak of (200) planes that appears at 2Θ = approximately 32°.

In the method for producing a cerium-based composite oxide for a solid oxide fuel cell according to the present invention, it is desirable that the predetermined BET value is 5 to 10 m²/g, and that a cerium-based composite oxide having the half-width of more than 0.3 is rejected, the half-width being calculated for a peak of (111) planes that appears at 2Θ = approximately 27.6°, the peak being obtained by XRD. It should be noted that the half-width may be an average of a value calculated for a peak of (400) planes that appears at 2Θ = approximately 67° and a value calculated for a peak of (200) planes that appears at 2Θ = approximately 32°.

The cerium-based composite oxide for a solid oxide fuel cell produced by the production method of the present invention can be produced by, for example, co-precipitation method, the mixed oxide method, the citrate method, spray pyrolysis method, or a sol-gel process.

The solid oxide fuel cell in the present invention is not particularly limited as long as the solid oxide fuel cell includes the cerium-based composite oxide produced by the production method according to the present invention. The production thereof, other materials, and the like may be, for example, publicly-known ones.

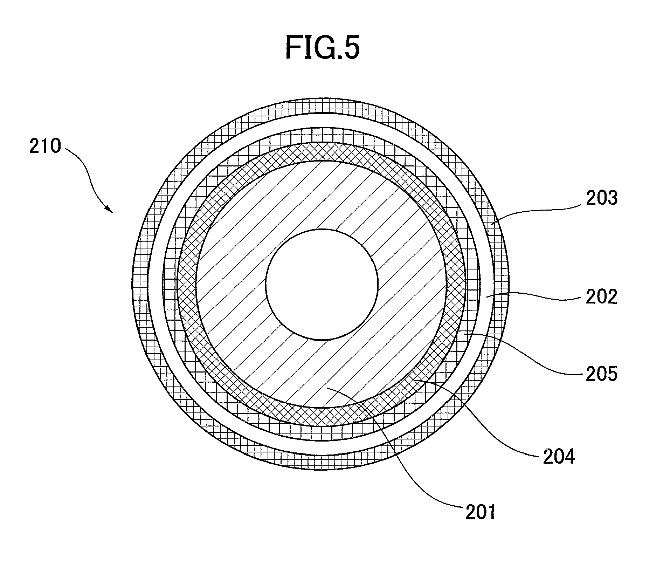

Fig. 5 is one aspect of a cross section of the solid oxide fuel cell of the present invention, and shows a type in which having a fuel electrode serving as a support. The solid oxide fuel cell of the present invention includes, for example, a fuel electrode support 201, a first layer 202a of a solid electrolyte layer 2 formed on a surface of the fuel electrode support and made of cerium-based composite oxide produced by the production method of the present invention, a second layer 202b of the solid electrolyte layer 202, and an air electrode 203 formed on a surface of the solid electrolyte.

The fuel electrode support 201 maybe made of, for example, Ni, NiO/zirconium-containing oxide, NiO/cerium-containing oxide, NiO/lanthanum gallate oxides, or the like.

The second layer 202b of the solid electrolyte layer may be made of, for example, a lanthanum gallate having a composition which provides a high oxygen ion conductivity. The lanthanum gallate oxides is represented by, for example, the general formula La₁₋ₐSrₐGa_{1-b-c}Mg_{b}CO_{c}O₃ (where 0.05≤a≤0.3, 0≤b≤0.3, 0≤c≤0.15) (hereinafter abbreviated as LSGMC) or the general formula La₁₋ₐSrₐGa_{1-b}Mg_{b}O₃ (where 0.05≤a≤0.3, 0≤b≤0.3) (hereinafter abbreviated as LSGM). Alternatively, the second layer 202b may include both of an LSGM layer and an LSGMC layer.

The air electrode 203 may be made of, for example, lanthanum-cobalt-based oxide, samarium-cobalt-based oxide, lanthanum-manganese-based oxide, lanthanum-ferrite-based oxide, lanthanum-nickel-based oxide, or the like.

From the view point of improving power generation performance, a fuel electrode reaction catalyst layer can be provided between the fuel electrode and the solid electrolyte layer. Examples of the material of the fuel electrode reaction catalyst layer, which are selected from the viewpoint of excellence in electron conduction and oxygen ion conductivity, include NiO/cerium-containing oxides, NiO/lanthanum gallate oxides, and the like.

The fuel electrode and the fuel electrode reaction catalyst layer may contain Fe, Co, Cu, Ru, Rh, Pd, Pt, and the like in addition to Ni.

A firing method for preparing the solid electrolyte fuel cell of the present invention by sintering is not particularly limited as long as high power output can be obtained. Specifically, sequential firing method may be used, or co-firing method may be used in which at least two or more components, desirably all components, are sintered at once. It should be noted, however, that with consideration given to manufacturability, co-firing method is more preferred because the number of steps is smaller.

A method for preparing each layer of the solid electrolyte fuel cell of the present invention is not particularly limited. Each layer can be prepared by slurry coating method, tape casting method, doctor blade casting method, screen printing method, EVD method, CVD method, RF sputtering method, or the like.

The shape of the solid electrolyte fuel cell of the present invention is not particularly limited. The solid electrolyte fuel cell may be any of planar and cylindrical, and can also be applied to, for example, a micro-tube type (outside diameter is not more than 10 mm, more preferably not more than 5 mm).

To be more precise, cerium-containing oxides and lanthanum gallate oxides in the present description are represented as the general formula Ce₁₋ₓLnₓO_{2-δ} and La₁₋ₐAₐGa_{1-b}X_{b}O_{3-δ}, respectively, because oxygen vacancies are created depending on the amount and type of additive atoms. Here, δ is an oxygen deficiency. However, since it is difficult to accurately measure δ, for convenience, cerium-containing oxides and lanthanum gallate oxides in the present description are represented as the general formula (CeO₂)₁₋ₓ(LnO_{1.5})ₓ and La₁₋ₐAₐGa_{1-b}X_{b}O₃, respectively.

The solid electrolyte fuel cell system of the present invention is not particularly limited as long as the solid electrolyte fuel cell system includes the solid oxide fuel cell of the present invention. The production thereof, other materials, and the like may be, for example, publicly-known ones.

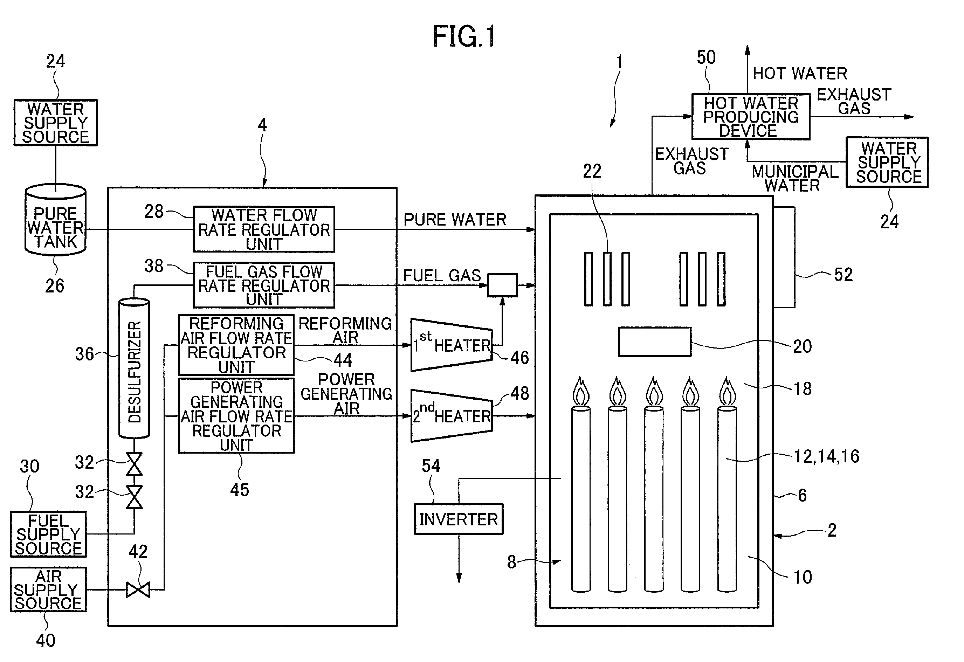

Fig. 1 is a view showing an overall configuration of a solid electrolyte fuel cell system according to one embodiment of the present invention. As shown in Fig. 1, a solid electrolyte fuel cell system 1 according to the embodiment of the present invention includes a fuel cell module 2 and an auxiliary unit 4.

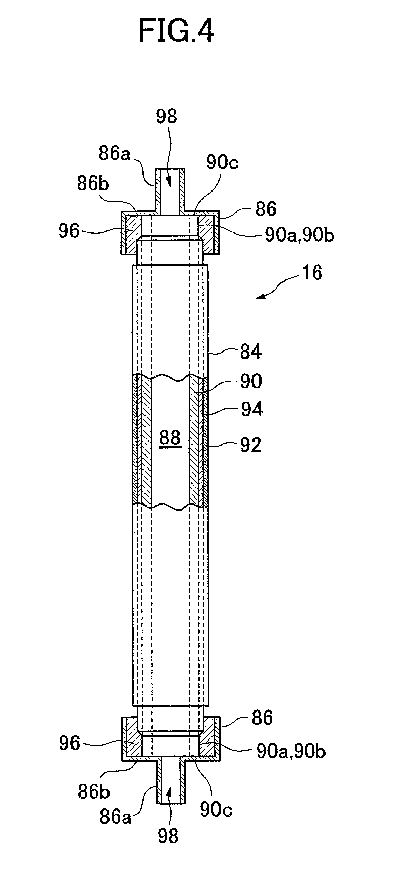

The fuel cell module 2 includes a housing 6. The housing 6 with an insulating material has a sealed space 8 therein. It should be noted that the insulating material is not an indispensable structure and may be omitted. A lower portion of the sealed space 8 is a power generating chamber 10 in which a fuel cell assembly 12 is disposed. The fuel cell assembly 12 carries out power generating reaction between fuel gas and oxidant (air). The fuel cell assembly 12 includes ten fuel cell stacks 14 (see Fig. 5), and each of the fuel cell stacks 14 includes 16 fuel cell units 16 (see Fig. 4). Thus, the fuel cell assembly 12 includes 160 fuel cell units 16, and all the fuel cell units 16 are serially connected.

In the sealed space 8 of the fuel cell module 2, a combustion chamber 18 is formed above the above-described power generating chamber 10. In the combustion chamber 18, residual fuel gas and residual oxidant (air) not used in the power generating reaction are combusted to produce exhaust gas. Moreover, above the combustion chamber 18, a reformer 20 for reforming fuel gas is disposed. The reformer 20 is heated by the heat of combustion of the residual gas to a temperature at which reforming reaction can take place. Further, above the reformer 20, an air heat exchanger 22 is disposed which receives the heat of the reformer 20 to heat air and which suppresses a decrease in the temperature of the reformer 20.

Next, the auxiliary unit 4 includes a pure water tank 26 for holding water from a water supply source 24 such as a municipal and filtering the water into pure water, and a water flow rate regulator unit 28 for regulating the flow rate of water supplied from the reservoir tank. The auxiliary unit 4 further includes a gas shutoff valve 32 for shutting off fuel gas, such as municipal gas, supplied from the fuel supply source 30, a desulfurizer 36 for desulfurizing the fuel gas, and a fuel gas flow rate regulator unit 38 for regulating the flow rate of the fuel gas. Furthermore, the auxiliary unit 4 includes an electromagnetic valve 42 for shutting off air as an oxidant supplied from an air supply source 40, a reforming air flow rate regulator unit 44 and a power generating air flow rate regulator unit 45 for regulating the flow rates of air, a first heater 46 for heating reforming air supplied to the reformer 20, and a second heater 48 for heating power generating air supplied to the power generating chamber. The first and second heaters 46 and 48 are provided to efficiently raise temperature at startup, but may be omitted.

Next, the fuel cell module 2 is connected to a hot-water producing device 50, which is supplied with exhaust gas. The hot-water producing device 50 is supplied with municipal water from the water supply source 24. This municipal water is turned into hot water by the heat of the exhaust gas to be supplied to a hot water reservoir tank in an unillustrated external water heater. Moreover, the fuel cell module 2 is provided with a control box 52 for controlling the supply flow rate of the fuel gas and the like. Further, the fuel cell module 2 has an inverter 54 connected thereto. The inverter 54 serves as an electrical power extraction unit (electrical power conversion unit) for supplying electrical power generated by the fuel cell module to the outside.

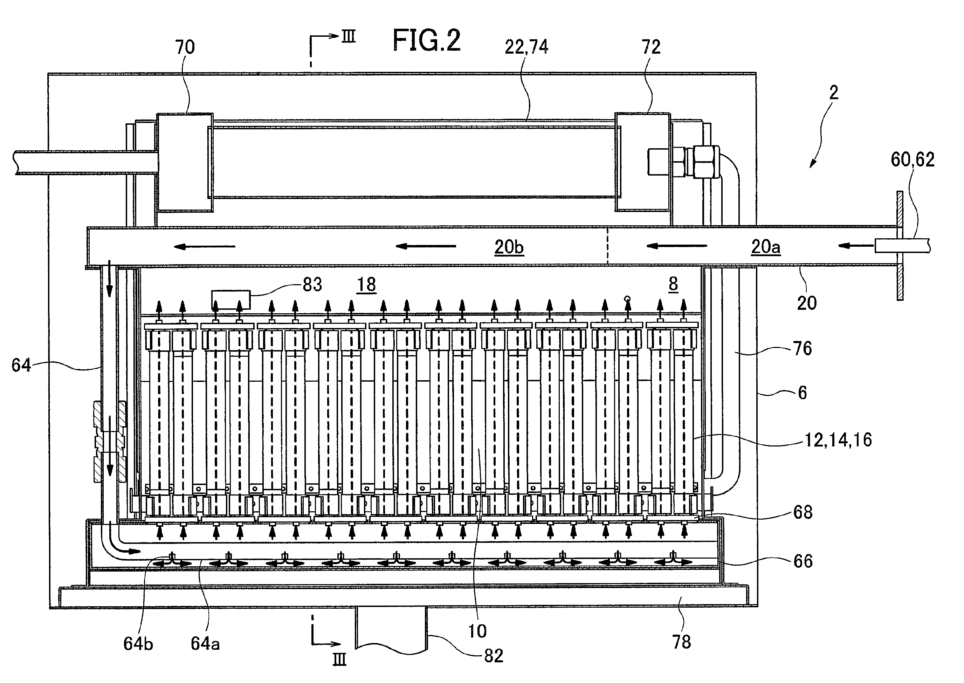

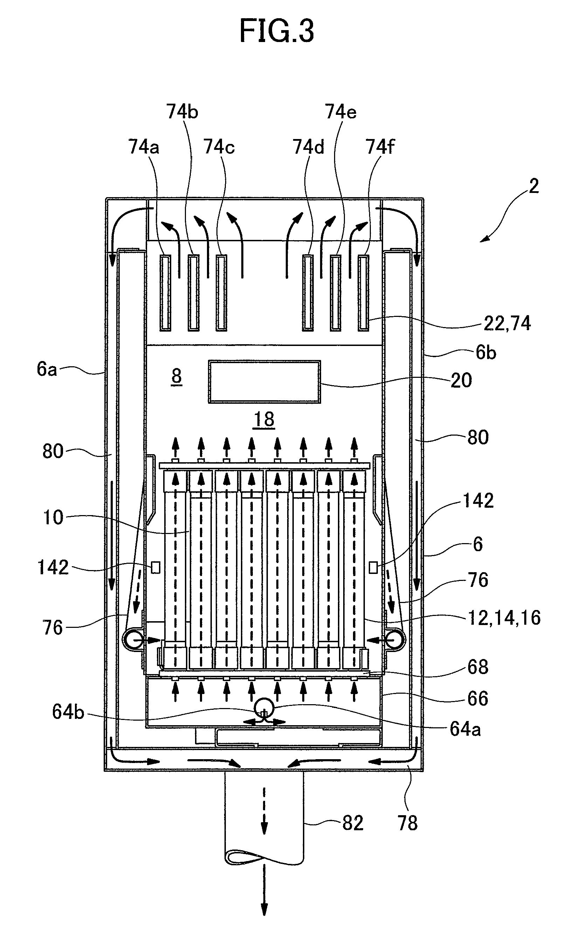

Next, with reference to Figs. 2 and 3, a description will be made of the internal structure of the fuel cell module of the solid electrolyte fuel cell system according to the embodiment of the present invention. Fig. 2 is a side cross-sectional view showing the fuel cell module of the solid electrolyte fuel cell system according to the embodiment of the present invention. Fig. 3 is a cross-sectional view taken along line III-III of Fig. 2. As shown in Figs. 2 and 3, the fuel cell assembly 12, the reformer 20, and the air heat exchanger 22 are arranged in sequence starting from the bottom in the sealed space 8 within the housing 6 of the fuel cell module 2 as described above.

A pure water guide pipe 60 for introducing pure water and a reformed gas guide pipe 62 for introducing the fuel gas to be reformed and reforming air are attached to an upstream end of the reformer 20. Within the reformer 20, a vaporizing section 20a and a reforming section 20b are formed in sequence starting from the upstream side thereof. The reforming section 20b is filled with a reforming catalyst. The fuel gas and air blended with water vapor introduced into the reformer 20 are reformed by the reforming catalyst filling the reformer 20.

A fuel gas supply line 64 is connected to a downstream end of the reformer 20. The fuel gas supply line 64 extends downward and further extends horizontally within a manifold 66 formed under the fuel cell assembly 12. Multiple fuel supply holes 64b are formed in a bottom surface of a horizontal portion 64a of the fuel gas supply line 64. Reformed fuel gas is supplied into the manifold 66 from the fuel supply holes 64b.

A lower support plate 68 having through holes for supporting the above-described fuel cell stacks 14 is attached to the top of the manifold 66, and fuel gas in the manifold 66 is supplied into the fuel cell unit 16.

Next, the air heat exchanger 22 is provided over the reformer 20. The air heat exchanger 22 includes an air concentration chamber 70 at the upstream side of the air heat exchanger 22 and two air distribution chambers 72 on the downstream side of the air heat exchanger 22. The air concentration chamber 70 and the air distribution chambers 72 are connected by six air flow conduits 74. Here, as shown in Fig. 3, air in the air concentration chamber 70 flows from the two sets of the air flow conduits 74, each set having three air flow conduits 74 (74a, 74b, 74c, 74d, 74e, 74f), into the respective air distribution chambers 72.

Air flowing in the six air flow conduits 74 of the air heat exchanger 22 is pre-heated by rising combustion exhaust gas from the combustion chamber 18. An air guide pipe 76 is connected to each of the air distribution chambers 72. The air guide pipe 76 extends downward. A lower end of the air guide pipe 76 communicates with a lower space in the power generating chamber 10 to introduce pre-heated air into the power generating chamber 10.

Next, an exhaust gas chamber 78 is formed below the manifold 66. As shown in Fig. 3, exhaust gas conduits 80 extending in the vertical direction are formed on the insides of a front surface 6a and a rear surface 6b which form the faces in the longitudinal direction of the housing 6. Top ends of the exhaust gas chamber conduits 80 communicate with a space in which the air heat exchanger 22 is disposed, and bottom ends thereof communicate with the exhaust gas chamber 78. An exhaust gas discharge pipe 82 is connected to nearly a central portion of a bottom surface of the exhaust gas chamber 78. A downstream end of the exhaust gas discharge pipe 82 is connected to the aforementioned hot-water producing device 50 shown in Fig. 1. As shown in Fig. 2, an ignition device 83 for starting the combustion of fuel gas and air is provided in the combustion chamber 18.

Next, referring to Fig. 4, the fuel cell unit 16 will be described. Fig. 4 is a partial cross-sectional view showing the fuel cell unit of the solid electrolyte fuel cell system according to the embodiment of the present invention. As shown in Fig. 4, the fuel cell unit 16 includes a fuel cell 84 and inner electrode terminals 86 respectively connected to top and bottom ends of the fuel cell 84. The fuel cell 84 is a tubular structure extending in the vertical direction, and includes a cylindrical inner electrode layer 90 defining a fuel gas flow path 88, a cylindrical outer electrode layer 92, and an electrolyte layer 94 between the inner electrode layer 90 and the outer electrode layer 92.

Since the inner electrode terminals 86 attached to the top and bottom ends of the fuel cell 16 have the same structure, the inner electrode terminal 86 attached to the top end will be specifically described here. A top portion 90a of the inner electrode layer 90 includes an outside perimeter surface 90b and a top end surface 90c which are exposed to the electrolyte layer 94 and the outer electrode layer 92. The inner electrode terminal 86 is connected to the outside perimeter surface 90b of the inner electrode layer 90 through a conductive seal material 96, and connected directly to the top end surface 90c of the inner electrode layer 90 to be electrically connected to the inner electrode layer 90. A fuel gas flow path 98 communicating with the fuel gas flow path 88 of the inner electrode layer 90 is formed in a center portion of the inner electrode terminal 86.

The fuel cell 16 is a fuel cell of the present invention.

Next, the operation of the solid electrolyte fuel cell system according to the present embodiment during the suspension of operations will be described. To stop the operation of the fuel cell module 2, first, the fuel gas flow rate regulator unit 38 and the water flow rate regulator unit 28 are operated to suppress the supply flow rates of fuel gas and water vapor to the reformer 20.

Moreover, during the suspension of operations of the fuel cell module 2, simultaneously with the reduction of the supply flow rates of fuel gas and water vapor to the reformer 20, the reforming air flow rate regulator unit 44 increases the supply flow rate of the power generating air into the fuel cell module 2 to cool the fuel cell assembly 12 and the reformer 20 with air, thus reducing the temperatures thereof. After that, when the temperature of the power generating chamber is suppressed to a predetermined temperature, e.g. , 500°C, the supply of fuel gas and water vapor to the reformer 20 is stopped, and thus steam reforming reaction SR in the reformer 20 is stopped. The supply of the power generating air is continued until the temperature of the reformer 20 is suppressed to a predetermined temperature, e.g., 200°C. When the predetermined temperature is reached, the supply of the power generating air from the power generating air flow rate regulator unit 45 is stopped.

As described above, in the present embodiment, since both of the steam reforming reaction SR in the reformer 20 and cooling with the power generating air are used during the suspension of operations of the fuel cell module 2, the operation of the fuel cell module can be stopped in a comparatively short time. Example

### [Preparation of Cerium-based composite Oxide]

A raw material solution was prepared by mixing aqueous solutions of cerium nitrate and lanthanum nitrate at the ratio of Ce:La=60:40 (mole ratio). Further, an amount of the raw material solution corresponding to 100 g in terms of (CeO₂)₁₋ₓ(LaO_{1.5})ₓ was diluted with pure water to a solids content of 10% by weight.

Next, a 100 g/L aqueous solution of ammonium hydrogen carbonate was added to the raw material solution with stirring at 25 °C to obtain a Ce-La based metallic salt. Then, a 100 g/L aqueous solution of ammonium hydrogen carbonate was added to the Ce-La based metallic salt with stirring, and heat treatment was performed at 80°C and atmospheric pressure. Thus, a slurry was obtained in which an amount of the Ce-La based metallic salt corresponding to 100 g in terms of (CeO₂)₁₋ₓ(LaO_{1.5})ₓ was dispersed. It should be noted that heat treatment time was appropriately changed for each of the raw materials shown in table 1.

Subsequently, the Ce-La based metallic salt was washed with pure water using a Buechner funnel, 1 L of pure water being used for every 100 g of the Ce-La based metallic salt. Then, the Ce-La based metallic salt was set aside at room temperature. After that, using a firing furnace, the temperature of the Ce-La based metallic salt was raised to 300°C in 20 hours, maintained at 300°C for 10 hours, then raised to 700°C in 15 hours, and maintained at 700°C for 10 hours. Thus, a Ce-La based oxide was obtained. It should be noted that the time to set the Ce-La based metallic salt aside at room temperature was appropriately changed for each of the raw materials shown in table 1.

For each of the obtained raw materials, measurement by Raman spectrometry and measurement of integral-width and half-width by XRD (X-ray diffraction) were performed.

### [Measurement Method for Raman Spectrometry]

Raman spectroscopic analysis was performed using a laser Raman spectrometer "NRS-2100," manufactured by JASCO Corporation, under the following conditions: a green laser (532 nm), and microscopic analysis (back scattering, objective magnification of 100X). A peak ratio I/I0 was calculated as follows: a straight line connecting a measured value at 650 cm⁻¹ and a measured value at 495 cm⁻¹ was drawn to be regarded as background; a peak height at 610 cm⁻¹ after background correction and a peak height at 565 cm⁻¹ after background correction were found; and the peak ratio I/I0 (Raman ratio) was calculated by (measured value at 610 cm⁻¹) / (measured value at 565 cm⁻¹). Table 1 shows respective Raman ratios of raw materials 1 to 6.

### [Conditions for Measuring Integral-width and Half-width]

Measurements of integral-width and half-width were performed on pressed raw material powders using an X-ray diffractometer "X"Pert PRO, "manufactured by PANalytical B.V. , under the following conditions: CuKα radiation, a tube voltage of 40 kV, and a tube current of 40 mA. Values were calculated for a peak of (111) planes that appears at 2Θ = approximately 27.6°. Table 1 shows the integral-width and the half-width for each of raw materials 1 to 6.

Based on these results in table 1, raw material 6 was rejected so that the dopant ratio of La to each ceria crystalline particles may be in the range of 0.35 to 0.45 (dopant ratio of 0.35 to 0.45 correspond to Raman ratios of 0.10 to 0.70), and raw materials 1 to 5 were used to obtain a cerium-based composite oxide of example 1.

It should be noted that a result of an after-mentioned power generation test using raw material 6 was unfavorable. On the other hand, the cerium-based composite oxide of example 1 was favorable, and cerium-based composite oxides respectively made from raw materials 1 to 5 were also favorable.

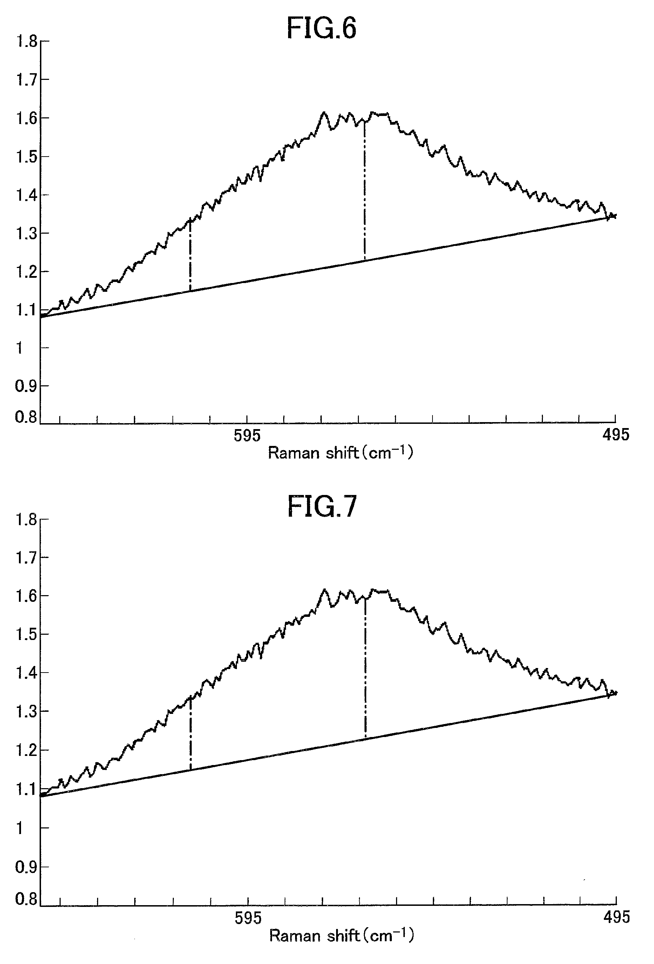

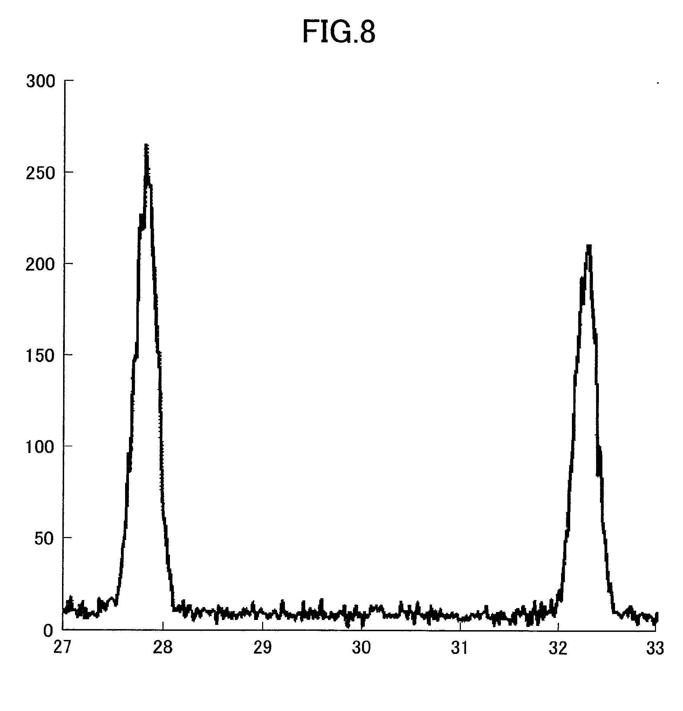

Fig. 6 shows as one example (raw material 3 in table 1) of the present invention for the case where the value (Raman ratio) calculated by (measured value at a Raman shift of 610 cm⁻¹) / (measured value at a Raman shift of 565 cm⁻¹) is 0.48. Fig. 7 shows as a comparative example (raw material 6 in table 1) for the case where the Raman ratio is 0.73. Fig. 8 shows as one example (raw material 4 in table 1) of the present invention for the case where the integral-width and the half-width are 0.27 and 0.30, respectively.

### [Preparation of Fuel Cell]

In this example, a double open-ended tubular type solid oxide fuel cell having a fuel electrode serving as a support was prepared. At that time, raw materials 1 to 5 shown in table 1 were used. A power generation test was also conducted for each of the raw materials. A method for preparing a tubular type solid oxide fuel cell will be described in detail below.

### 1. Preparation of Cell with Fuel Electrode Serving As Support

Fig. 5 shows the configuration of a prepared solid oxide fuel cell having a fuel electrode serving as a support. Specifically, the solid oxide fuel cell includes a solid electrolyte layer 202 formed around a fuel electrode support 201 and an air electrode 203 formed around the solid electrolyte layer 202. A fuel electrode reaction catalyst layer 204 is provided between the fuel electrode support 201 and the solid electrolyte layer 202, and a reaction preventing layer 205 is provided between the solid electrolyte layer 202 and the fuel electrode reaction catalyst layer 204. Preparation procedures will be described below.

A mixture of NiO powder and (ZrO₂)_{0.90}(Y₂O₃)_{0.10} (hereinafter abbreviated as YSZ) powder was prepared by wet mixing, and then heat-treated and comminuted. Thus, raw material powder for a fuel electrode support was obtained. The mixing ratio of the NiO powder to the YSZ powder was 65/35 by weight. The raw material powder was extruded to prepare a cylindrical extrudate. The extrudate was heat-treated at 900°C to form a calcined material. On the surface of the calcined material, a fuel electrode reaction catalyst layer, a reaction preventing layer, and a solid electrolyte layer were formed in that order by slurry coating method. This layered assembly and a support were co-fired at 1300°C. It should be noted that at that time, the thickness of the reaction preventing layer was adjusted to be from 2 to 10 µm. Moreover, the thickness of the solid electrolyte layer was adjusted to be from 30 to 60 µm. Next, masking was performed on the cell so that the area of the air electrode may be 17.3 cm², and the air electrode was formed on the surface of the solid electrolyte layer and fired at 1100°C. It should be noted that the fuel electrode support had an outside diameter of 10 mm, a wall thickness of 1 mm, and an effective cell length of 110 mm after co-firing. A method for preparing a slurry for each layer used in slurry coating method will be described in detail in the following (1-a) to (1-d).

### (1-a) Preparation of Slurry for Fuel Electrode Reaction Catalyst Layer

A mixture of NiO powder and GDC 10 powder was prepared by co-precipitation method and then heat treated. Thus, powder for the fuel electrode reaction catalyst layer was obtained. The mixing ratio of the NiO powder and the GDC 10 powder was 50/50 by weight. The average particle diameter was adjusted to be 0.5 µm. Then, 40 parts by weight of the powder was mixed with 100 parts by weight of a solvent (ethanol), 2 parts by weight of a binder (ethyl cellulose), 1 part by weight of a dispersant (poly (oxyethylene) alkyl phosphate ester), and 1 part by weight of an anti-foaming agent (sorbitan sesquioleate) . After that, the resultant mixture was fully stirred to prepare a slurry.

### (1-b) Preparation of Slurry for Reaction preventing layer

The material of the reaction preventing layer was powder of the aforementioned cerium-based composite oxide. The powder was mixed with 0.2 parts by weight of Ga₂O₃ powder as a sintering additive, 100 parts by weight of a solvent (ethanol), 2 parts by weight of a binder (ethyl cellulose), 1 part by weight of a dispersant (poly (oxyethylene) alkyl phosphate ester), and 1 part by weight of an anti-foaming agent (sorbitan sesquioleate). After that, the resultant mixture was fully stirred to prepare a slurry.

### (1-c) Preparation of Slurry for Solid Electrolyte Layer

The material of the second layer was LSGM powder having the composition La_{0.8}Sr_{0.2}Ga_{0.8}Mg_{0.2}O₃. Then, 40 parts by weight of the LSGM powder was mixed with 100 parts by weight of a solvent (ethanol), 2 parts by weight of a binder (ethyl cellulose), 1 part by weight of a dispersant (poly (oxyethylene) alkyl phosphate ester), and 1 part by weight of an anti-foaming agent (sorbitan sesquioleate). After that, the resultant mixture was fully stirred to prepare a slurry.

### (1-d) Preparation of Slurry for Air Electrode

The material of the air electrode was powder having the composition La_{0.6}Sr_{0.4}Co_{0.8}Fe_{0.2}O₃. Then, 40 parts by weight of the powder was mixed with 100 parts by weight of a solvent (ethanol), 2 parts by weight of a binder (ethyl cellulose), 1 part by weight of a dispersant (poly (oxyethylene) alkyl phosphate ester), and 1 part by weight of an anti-foaming agent (sorbitan sesquioleate). After that, the resultant mixture was fully stirred to prepare a slurry.

### [Suspension of Power Generation Test]

Obtained fuel electrode support cells (electrode effective area: 17.3 cm²) were assembled into the solid electrolyte fuel cell system 1 as the fuel cell assembly 12 and as the fuel cell module 2, and power generation test was conducted. As a condition for power generation, fuel was a gas mixture of (H₂+3%H₂O) and N₂. Fuel utilization was 10%. Oxidant was air. Temperature in stationary power generation was 700°C. After operation at a current density of 0.125 A/cm², the operation of the fuel cell module 2 was stopped. By reducing the flow rates of fuel gas and water vapor supplied to the reformer 20 and at the same time increasing the flow rate of power generating air supplied to the fuel cell module 2 through the reforming air flow rate regulator unit 44, the fuel cell assembly 12 and the reformer 20 was cooled by air, and the temperatures thereof were suppressed. Then, when the temperature of the power generating chamber was suppressed to 500°C, the supply of the fuel gas and the water vapor to the reformer 20 was stopped. The supply of the power generating air was stopped when the temperature of the power generating chamber reached 150°C.

**[Table 1]**

| Raw Material No. | Raman Ratio | Integral-Width | FWHM | Raw Material BET | Result of Power Generation Shutdown |
|---|---|---|---|---|---|
| 1 | 0.35 | 0.15 | 0.17 | 7 | Excellent |
| 2 | 0.35 | 0.16 | 0.19 | 6 | Excellent |
| 3 | 0.48 | 0.21 | 0.25 | 7 | Good or Excellent |
| 4 | 0.52 | 0.27 | 0.30 | 7 | Good |
| 5 | 0.56 | 0.25 | 0.28 | 7 | Good |
| 6 | 0.73 | 0.40 | 0.45 | 7 | Poor |

Table 1 shows measured values and a result of suspension of power generation test for each raw material. It should be noted that in table 1, "Excellent" indicates that there were no trouble in power generation and no detachment of the reaction preventing layer after not less than 100 start-stop cycles, "Good" indicates that there were no trouble in power generation and no detachment of the reaction preventing layer after not less than five start-stop cycles, and "Poor" indicates that there were detachment of the reaction preventing layer and a degradation in performance after less than five start-stop cycles. Here, raw material 6 was rejected, and raw materials 1 to 5 after undergoing the dopant ratio estimation step were used to obtain an example made by the production method proposed in the present invention. It was confirmed that excellent power generation performance can be obtained, though not shown in table 1. Moreover, cells respectively produced using raw materials 1 to 5 after undergoing the dopant ratio estimation step also exhibited excellent power generation performance shown in table 1. The unit of integral-width is the degree.

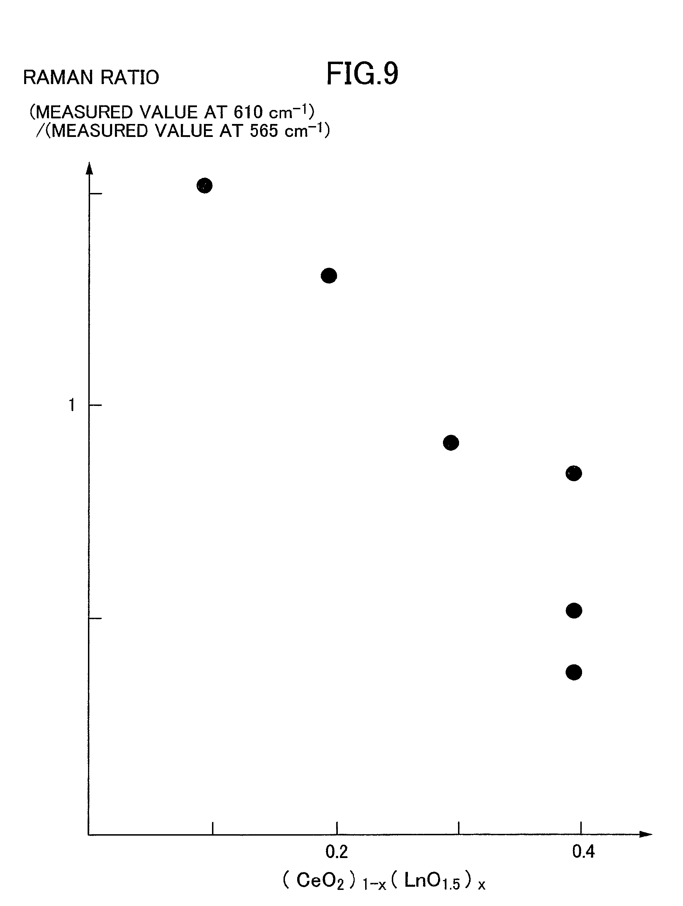

Fig. 9 shows a peak ratio I/I0 (Raman ratio) calculated by (measured value at a Raman shift of 610 cm⁻¹) / (measured value at a Raman shift of 565 cm⁻¹) for each of the cases where x is 0.1, 0.2, 0.3, and 0.4 in conventionally used cerium-based composite oxides represented by the general formula (CeO₂)₁₋ₓ(LaO_{1.5})ₓ. The horizontal axis shows the value of x, and the vertical axis shows the calculated peak ratio I/I0. Raman spectroscopic analysis was performed using a laser Raman spectrometer "NRS-2100," manufactured by JASCO Corporation, under the following conditions: a green laser (532 nm), and microscopic analysis (back scattering, objective magnification of 100X). Each of peak ratios I/I0 was calculated as follows: a straight line connecting a measured value at 650 cm⁻¹ and a measured value at 495 cm⁻¹ was drawn to be regarded as background; a peak height at 565 cm⁻¹ after background correction and a peak height at 610 cm⁻¹ after background correction were found; and the peak ratio I/I0 (Raman ratio) was calculated by (measured value at 565 cm⁻¹) / (measured value at 610 cm⁻¹). It should be noted that a measured value at a Raman shift of 565 cm⁻¹ means a measured value at a peak around 565 cm⁻¹, and a measured value at a Raman shift of 610 cm⁻¹ means a measured value at a peak around 610 cm⁻¹. As is clearly seen in Fig. 9, the smaller the value of x, the greater the calculated peak ratio 1/10 as the calculated result.

Specifically, it can be seen that the result calculated by (measured value at 610 cm⁻¹)/(measured value at 565 cm⁻¹) reflects the value of x. In other words, it can be seen that the Raman ratio decreases with increasing value of conventionally used general dopant ratio. On the other hand, it has been proved that in the case where the dopant ratio x is 0.4, the Raman ratio varies while the conventional general dopant ratio is fixed at 0.4. This seems to be explained as follows: that is, even when a conventional general dopant ratio is 0.4, various actual dopant ratio exist, and Raman ratios appear according to the actual dopant ratio. Here, it seems appropriate that an actual dopant ratio is the dopant ratio of a metal element to each ceria crystalline particle. From the above, the studies have revealed for the first time that the results of good performance with regard to power generation can be obtained by limiting the dopant ratio of a metal element to each ceria crystalline particle, not a conventional general dopant ratio, to a predetermined range of 0.35 to 0.45, as shown in table 1. It should be noted that in Fig. 9, from the direct proportional relationship between the dopant ratio x and the Raman ratio for dopant ratio ranging from 0.1 to 0.3, Raman ratios are derived to be 0.10 to 0.70 for dopant ratio ranging from 0.35 to 0.45.

On the other hand, the possibility of estimating the dopant ratio of a metal element to each ceria crystalline particle using integral-width or half-width obtained by XRD was considered as follows : an XRD peak is shifted depending on the dopant ratio of La to ceria; when La increases, an XRD peak is shifted to a lower angle; in XRD performed on a raw material obtained by mixing ceria crystalline particles having different dopant ratio, peaks corresponding to the respective dopant ratio exist close to each other; as a result, a peak width is widened; accordingly, the dopant ratio of a metal element to each ceria crystalline particles are supposed to vary when integral-width and half-width obtained by XRD are large. Thus, it was revealed for the first time that integral-width and half-width obtained by XRD indicate variations in dopant ratio. It should be noted that from the direct proportional relationship between the dopant ratio x and the integral-width for dopant ratio ranging from 0.35 to 0.45, integral-widths obtained by XRD are derived to be 0.10 to 0.30 for dopant ratio ranging from 0.35 to 0.45, and half-widths are derived to be 0.10 to 0.30 similarly.

## Claims

1. A method for producing a cerium-based composite oxide to be used as a reaction preventing layer of a solid oxide fuel cell to prevent reaction between a fuel electrode layer and an electrolyte layer, comprising the steps of:
mixing a compound including at least one metal element selected from La, Pr, and Nd and a cerium-based compound to obtain a mixture; and
firing the mixture to obtain a fired product,
the method further comprising a dopant ratio adjustment step of adjusting a dopant ratio of the metal element to each ceria crystalline particle constituting the fired product to limit the dopant ratio to a predetermined range throughout the fired product.

2. The method according to claim 1, wherein the metal element in the compound including the metal element mixed with the cerium-based compound is La, and the predetermined range in the dopant ratio adjustment step is from 0.35 to 0.45.

3. The method according to claim 2, wherein the dopant ratio adjustment step comprises a step of identifying a cerium-based composite oxide having a dopant ratio in the range of 0.35 to 0.45 through a dopant ratio estimation step of estimating the dopant ratio, and rejecting a cerium-based composite oxide having a dopant ratio outside the range of 0.35 to 0.45.

4. The method according to claim 3, wherein in the dopant ratio estimation step, the dopant ratio is estimated based on a distribution of Raman shift peaks.

5. The method according to claim 4, wherein a cerium-based composite oxide having a ratio of a peak value at a Raman shift of 610 cm⁻¹ to a peak value at a Raman shift of 565 cm⁻¹ which is more than 0.7 is rejected.

6. The method according to claim 3, wherein in the dopant ratio estimation step, the dopant ratio is estimated using any one of an integral-width and a half-width, each obtained by XRD for a predetermined BET value.

7. The method according to claim 6, wherein the predetermined BET value is 5 to 10 m²/g, and a cerium-based composite oxide having the integral-width of more than 0.3 is rejected, the integral-width being calculated for a peak of (111) planes that appears at 2Θ = approximately 27.6°, the peak being obtained by XRD.

8. The method according to claim 6, wherein the predetermined BET value is 5 to 10 m²/g, and a cerium-based composite oxide having the half-width of more than 0.3 is rejected, the half-width being calculated for a peak of (111) planes that appears at near 2Θ = 27.6°, the peak being obtained by XRD.

9. A solid oxide fuel cell comprising the cerium-based composite oxide produced by the method according to any one of claims 1 to 8, the cerium-based composite oxide being disposed as a reaction preventing layer between a fuel electrode and an electrolyte.

10. A fuel cell system comprising the solid oxide fuel cell according to claim 9.

11. A solid oxide fuel cell comprising: a cerium-based composite oxide preventing reaction between a fuel electrode layer and an electrolyte layer, the cerium-based composite oxide being disposed as a reaction preventing layer between the fuel electrode and the electrolyte,
wherein in the cerium-based composite oxide, a dopant ratio of at least one metal element selected from La, Pr, and Nd to a ceria crystalline particle is in a predetermined range throughout the ceria crystalline particles.

12. The solid oxide fuel cell according to claim 11, wherein the metal element is La, and the predetermined range is from 0.35 to 0.45.

13. The solid oxide fuel cell according to claim 12, wherein the dopant ratio is estimated based on a distribution of Raman shift peaks.

14. The solid oxide fuel cell according to claim13, wherein a ratio of a peak value at a Raman shift of 610 cm⁻¹ to a peak value at a Raman shift of 565 cm⁻¹ is not more than 0.7 throughout the cerium-based composite oxide.

15. The solid oxide fuel cell according to claim 12, wherein the dopant ratio is estimated using any one of an integral-width and a half-width, each obtained by XRD for a predetermined BET value.

16. The solid oxide fuel cell according to claim 15, wherein the predetermined BET value is 5 to 10 m²/g, and the integral-width is not more than 0.3 throughout the cerium-based composite oxide, the integral-width being calculated for a peak of (111) planes that appears at near 2Θ = 27.6°, the peak being obtained by XRD.

17. The solid oxide fuel cell according to claim 15, wherein the predetermined BET value is 5 to 10 m²/g, and the half-width is not more than 0.3 throughout the cerium-based composite oxide, the half-width being calculated for a peak of (111) planes that appears at near 2Θ = 27.6°, the peak being obtained by XRD.

18. A fuel cell system comprising the solid oxide fuel cell according to any one of claims 11 to 17.
